Europäisches Patentamt

European Patent Office

Office européen des brevets

(19)

(11) Publication number: **0 271 128 B1**

(12) **EUROPEAN PATENT SPECIFICATION**

(45) Date of publication of patent specification: **29.07.92**　(51) Int. Cl.⁵: **H04B 10/00**, H04B 10/22

(21) Application number: **87202175.3**

(22) Date of filing: **06.11.87**

(54) **Infra-red transmit/receive unit for omnidirectional transmission in horizontal direction, and infra-red communication system provided with a number of said units.**

(30) Priority: **07.11.86 NL 8602833**

(43) Date of publication of application:
**15.06.88 Bulletin 88/24**

(45) Publication of the grant of the patent:
**29.07.92 Bulletin 92/31**

(84) Designated Contracting States:
**AT BE CH DE ES FR GB GR IT LI LU NL SE**

(56) References cited:
**EP-A- 0 034 859
DE-A- 1 959 331
DE-A- 2 820 184
FR-A- 2 352 452**

**PATENT ABSTRACTS OF JAPAN, vol. 7, no.
229 (E-203)[1374], 12th October 1983; & JP-
A-58 120 331**

**PATENT ABSTRACTS OF JAPAN, vol. 7, no.
264 (E-212)[1409], 24th November 1983; & JP-
A-58 146 150**

(73) Proprietor: **EUROPE CONTAINER TERMINUS
B.V.
Seattleweg 7 P.O. Box 7400
NL-3000 HK Rotterdam(NL)**

(72) Inventor: **Latour, Pieter L.
Milletstraat 45
NL-1077 ZC Amsterdam(NL)**

(74) Representative: **van der Beek, George Frans,
Ir. et al
Nederlandsch Octrooibureau Schevening-
seweg 82 P.O. Box 29720
NL-2502 LS 's-Gravenhage(NL)**

Rank Xerox (UK) Business Services

## Description

The invention relates to an infra-red transmit/receive unit for omnidirectional transmission, mainly in horizontal direction, of infra-red message signals, including a transparent tube to be arranged vertically and having at least one of a transmit platform with at least one light-emitting diode and a receive platform with at least one photodetector, the transmit platform containing a horizontal plate with the light-emitting diode(s) radiating vertically towards a conical 45° reflector, and the receive platform containing a horizontal plate with the photodetector(s) directed in vertical direction towards a conical 45° reflector, the axis of the conical 45° reflectors coinciding with the tube axis. Such an infra-red transmit/receive unit is known from DE-A-2820184. The invention also relates to an infra-red communication system provided with a number of said tranmit/receive units for transmission and exchange of message signals mainly in the horizontal plane.

In the above mentioned known transmit/receive unit in principle one photodiode or photodetector is used horizontally arranged opposite the conical 45° reflector. In case the communication distance to be spanned becomes larger or in case the surface area of the one or more photodiodes is too small a correct and interference-free message transmission is not guaranteed any more. The invention aims to obviate this problem and to provide a transmit/receive unit with high sensitivity and reliability for communication over sufficient distances.

According to the invention this object is realised in an infra-red transmit/receive unit of the type mentioned in the introduction such that, in the receive platform, the conical 45° reflector is truncated, the plate with the photodetector(s) being formed by the top face of said truncated conical reflector and in that a parabolic reflector, whose axis coincides with the tube axis, is situated opposite the conical reflector such that the photosensitive surfaces of the photodetector(s) are directed towards the parabolic reflector.

In an advantageous embodiment of the invention the transmit/receive unit comprises a plurality of transmit platforms provided one above the other in the transparent tube such that the light-emitting diodes radiate upwards, and that the receive platform is situated above the uppermost transmit platform such that the parabolic reflector forms the top of the transparent tube.

The above mentioned infra-red transmit/receive unit can further with great advantage be employed in an infra-red communication system in which messages in the form of pulse-coded data or message signals are transmitted and exchanged between such units which can be installed in movable vehicles or on a fixed post. From the European Patent 34859 such a communication system is known the message transmission of which is used for controlling vehicle movements for transporting goods or personnel in a particular area. For said purpose a transmit/receive unit together with associated data-input and read-out unit is provided on each vehicle which can be controlled in direction and speed and one or more such transmit/receive units are permanently installed in the area itself. The transmission in this known communication system takes place mainly in the vertical direction because the fixed transmit/receive units connected to the central computer are accomodated at particular positions in the road surface and are directed upwards, and because such transmit/receive units are also mounted on the vehicles travelling over the road surface, which units are directed downwards towards the road surface and are connected to the vehicle computer. This system is used to achieve regulation of the traffic of the vehicles which travel across a large storage area and which transport container and such goods. However, a drawback in this known system is that the message transmission only takes place if the vehicle or the carrier is moving in direct vicinity of the transmit/receive unit accomodated in the road surface. Furthermore, an adequate number of such transmit/receive units have to be accomodated in the road surface in order to guarantee a reasonably rapid and reliable regulation of traffic. In addition to the units in the road surface, an appreciable amount of cabling has to be laid in the ground due to which the costs of the entire system is high.

With the above mentioned infra-red transmit/receive unit according to the invention said above mentioned problems in the known communication system can be obviated. This is achieved in an infra-red communication system of the type mentioned such that the infra-red signals are transmitted and exchanged between transmit/receive units as mentioned, whereby the message transmission is used for controlling vehicle movements for transporting goods or personnel in a particular area, and whereby such a transmit/receive unit with associated data-input and read-out unit is provided on each vehicle and one or more permanently installed such transmit/receive abovementioned transmit/receive units are mounted on top of or underneath a vehicle and the permanently installed transmit/receive units are accordingly provided above the ground on a mast or corresponding fixed structure.

Because, in this system according to the invention, the transmit/receive units can transmit and receive omnidirectionally in the horizontal plane, and because the range - due to the sensitive and efficient receive platform in the said unit - is sufficiently large for the area concerned, only a few fixed positions need to be installed. Because, in this system, the transmission via the ground cables is omitted, it is now possible, through a correct coverage of the area with a few fixed transmit/receive units, to communicate at any required instant because there is always a visual contact between a vehicle and one of the fixed transmit/receive units on the masts connected directly to the central post.

The invention will be explained in more detail on the basis of an exemplary embodiment with reference to the drawings, in which:

Figure 1 shows a sketch of a storage or transshipment area in which the horizontal infra-red communication system according to the invention is used:

Figure 2 shows a side view of a transmit/receive unit according to the invention;

Figure 3 shows a block diagram of the connection of the fixed transmit/receive units and a transmit/receive unit mounted on a vehicle; and

Figures 4 and 5 show respectively a diagram of the final driving stage of the transmitting diodes and of the receive amplifier of the receiving diodes.

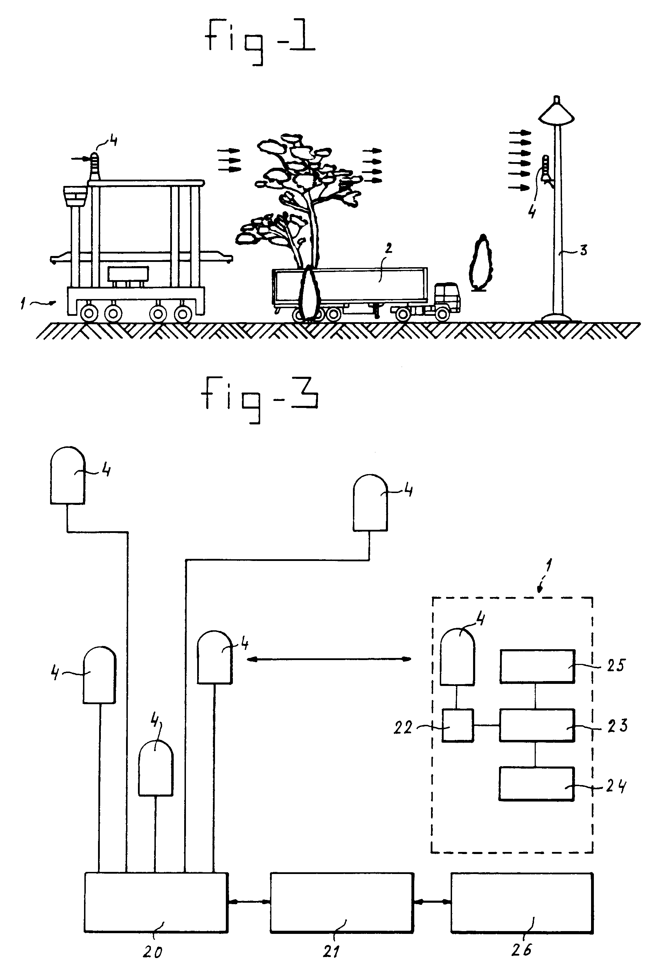

Figure 1 shows a diagrammatic view of a storage or transshipment area in which goods such as containers are transported by vehicles. In Figure 1, 1 indicates a vehicle or carrier for receiving and transporting a good or container 2, 3 indicates a fixed object such as a mast, and 4 indicates a transmit/receive unit respectively. This communication system operates over a distance of, for example 100 to 200 m and guarantees a wireless and interference-free message transmission in a rapid and reliable manner. This takes place respectively by means of the transmit/receive unit 4 mounted on top of the vehicle 1 and the transmit/receive unit 4 mounted on the mast 3, which transmit and receive mainly omnidirectionally. It is also possible to mount the vehicle transmit/receive unit underneath instead of on top of the vehicle and to install the permanently installed transmit/receive unit at a height corresponding to this. It is obvious that no obstructions, or as few obstructions as possible, are present in the light transmission path. Instead of on a mast, the fixed transmit/receive unit may also be attached to a quasi-fixed object such as a fork-lift truck. As a result of this embodiment communication is possible at any required instant between the driver or robot of the vehicle and the central post, as a result of which the communication transmission takes place in real time.

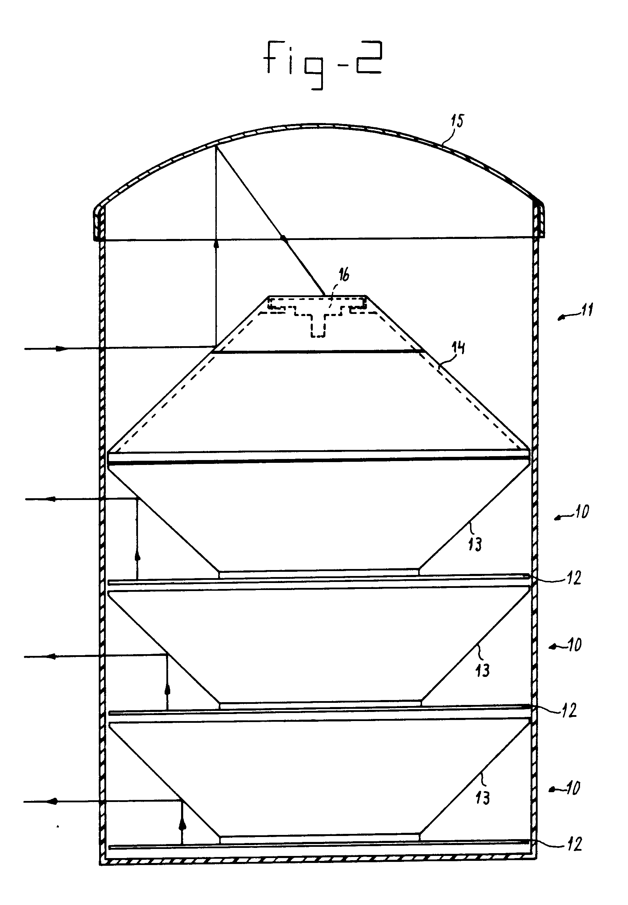

Figure 2 shows a side view of an exemplary embodiment of the transmit/receive unit according to the invention. This consists of a tube of transparent plastic material, such as perspex, in which three transmit platforms 10 and one receive platform 11 are accomodated. In each transmit platform a large number of infra-red light-emitting diodes are installed on a disc 12 in a manner such that they radiate light upwards via an angle of aperture of 10° to a truncated conical reflector placed on the disc whose axis coincides with the tube axis and whose apex angle is 90°. As a result of this the radiation transmitted upwards is converted into a radiation extending in the horizontal plane. In each transmit platform thirty two branches of twelve light-emitting diodes, for example of the type SFH 484, are mounted on the associated disc. The driving final stage of the diodes is also situated on the disc inside the truncated cone. If the distance to be spanned becomes larger, it will be possible to provide more diodes per transmit platform, which must have a somewhat larger circumference, or more transmit platforms. The receive platform 11 situated in the tube at the top contains a truncated conical reflector 14 whose axis coincides with the tube axis and whose virtual apex angle is 90°, and a parabolic mirror 15 situated above it. The mainly horizontal incident infra-red light is reflected upwards by the reflection cone 14 to the parabolic mirror 15 which focuses the light on the top face 16 on which a large receiving diode or a number of smaller photodiodes is situated. The receive amplifier circuit of the receive platform is situated underneath the top face. In the abovementioned embodiment, the angle of emission and the angle of incidence of the infra-red light have been matched to each other and are approximately equal to 10°. As a result of this the advantage comes about that interfering light, such as sunlight, can virtually not penetrate the receiver. As a result of this the transmit/receive unit can also be installed in an inverted position with respect to the manner indicated in Figure 2.

Figure 3 shows a simple block diagram of the horizontal infra-red communication system. On the lefthand side in the diagram, five transmit/receive units 4 are shown which are permanently mounted on masts in the particular area and which are connected to a modular interface unit 20 which is then connected to the control computer 21. Said control computer is connected to a main computer 26 in the central post. On the righthand side in the diagram a transmit/receive unit 4 mounted on a vehicle 1 is shown. Said unit 4 is connected via an interface unit 22 to the vehicle computer 23 which is further provided with a display unit 25 and a keyboard input unit 24. The circuits required for controlling the transmitting diodes are accomodated directly in each transmit platform of the tubular transmit/receive unit, while the supply of the transmitting diodes and of the receiving diodes may be provided directly beneath the transmit/receive unit or at a distance. The fixed transmit/receive units, which may be mounted on existing lighting masts or on a quasi-fixed object such as a fork-lift truck, are supplied from the existing 220 V AC mains or the 12 V AC of the fork-lift truck. The transmit/receive units on the vehicle are supplied from the voltage present in the vehicle which is equal to 24 V DC. A 250 W supply circuit which can be energized both with 220 V AC and with 15 tot 34 V DC has been developed specially for the transmit/receive unit.

The connection between the fixed transmit/receive units and the interface unit 20 shown in Figure 3 is formed by two times two twisted cores, the maximum length of which is 2000 m. The modular interface unit 20 is connected with the control computer 21 via a parallel busline. Said control computer regulates the data flow between the main computer 26 and the operational vehicles 1.

An example of the data exchange during the regulation of traffic is given below. The main computer gives a particular assignment for a particular vehicle to the control computer. The latter traces the vehicle concerned according to a particular protocol and transmits the assignment concerned. The driver in the vehicle performs said assignment and then messages back the manner in which the assignment has been fulfilled. The control computer then transmits these data to the main computer. The time duration of transmitting and receiving is only a few tenths of a millisecond. The assignment delivered by the main computer is indicated on the display unit in the vehicle. The performance of the assignment concerned is keyed in after performance and the complete item is then sent back to the main computer.

The system of conventions by which the communication between the fixed posts and the mobile posts is regulated consists of a protocol. In this case, in particular, where the range of the transmitters and receivers is so large that a transmitter can be detected by several receivers, clear requirements must be imposed on the protocol since chaos would otherwise result. Since the degree of capacity utilization of such a communication system is in fact relatively low, for example two message transmissions per minute, a solution based on "interrogation" has been chosen. For this interrogation, the initiative for establishing the connection lies wholly with the control computer. The protocol used in this case breaks down into two parts: an outgoing transmitted message to a vehicle and a response or returning message from the vehicle. It is also possible in the case of interrogation to establish a matrix in which it is determined which transmitter/receiver of a particular vehicle is the one most affected. By arranging for each interrogation sequence to start with said transmitter/receiver, it is possible to accelerate the tracing of the particular vehicle.

A semiduplex communication is achieved with the abovementioned infra-red communication system, transmission and reception therefore taking place alternately.

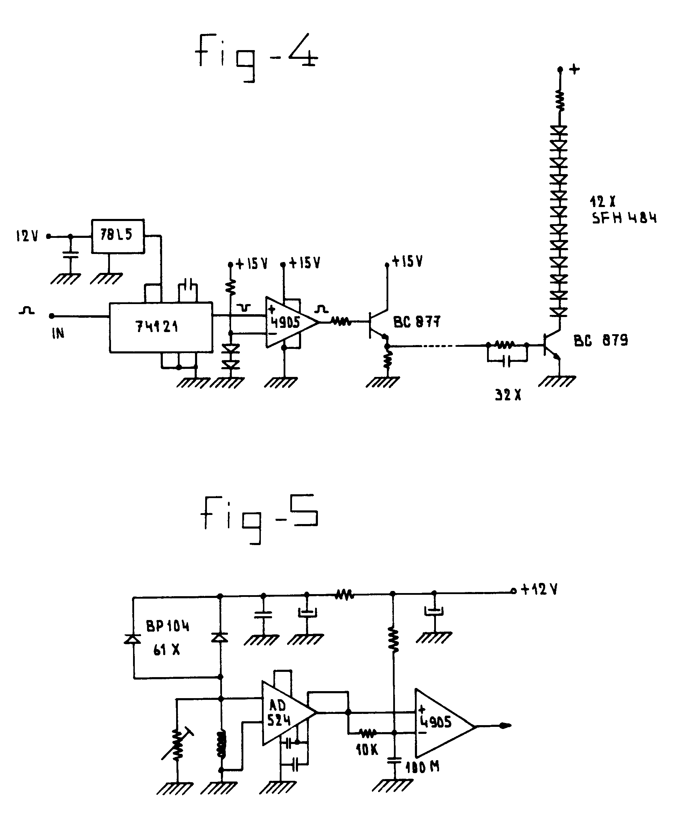

Figure 4 shows a block diagram of the supply circuit of a transmit platform. A positive flank edge, which is then converted at the output into a pulse of 1.8 $\mu$sec, is fed to the "in" input of a monovibrator 74121. Said pulse is then amplified by a trigger circuit of the type HA 4905 and transmitted to the emitter follower BC 877. To said emitter follower, which has a very low output impedance, there are connected thirty two driving stages which each separately contain twelve diodes of the type SFH 484. Each driving stage consumes approximately 2 A so that the peak current per transmit platform is 64 A.

Figure 5 shows the diagram of the receive amplifier circuit of the receive platform. The reception is provided by a grouping of sixty one photodiodes of the type BP 104. The photocurrent of said photodiodes passes through a very low-impedance inductance of approximately 10 mH and is damped to form an aperiodic signal by means of the 1500 ohm trimmer potentiometer. The signal thus obtained is amplified in the instrumentation amplifier type 524 and fed to a HA 4905 trigger circuit. Said circuit is biased by a resistor network with a voltage of 50 mV. Pulses which are larger than said 50 mV result in an outgoing pulse which is fed via the cable to the digital interface. Here the pulses are assembled to form characters which are processed in the computer.

The communication system and transmit/receive unit described above can also be used with advantage in harbour areas, warehouses, freight terminals etc. It is obvious that modifications can be made within the scope of the invention. The number of diodes in the transmit platform or receive platform and the distribution thereof over the separate branches may be altered in accordance with the application.

**Claims**

1. Infra-red transmit/receive unit (4) for omnidirectional transmission, mainly in horizontal direction, of infra-red message signals, including a transparent tube to be arranged vertically and having at least one of a transmit platform (10) with at least one light-emitting diode and a receive platform (11) with at least one photodetector, the transmit platform containing a horizontal plate (12) with the light-emitting diode(s) radiating vertically towards a conical 45° reflector (13), and the receive platform containing a horizontal plate with the photodetector(s) directed in vertical direction towards a conical 45° reflector (14), the axis of the conical 45° reflectors coinciding with the tube axis, characterized in that, in the receive platform, the conical 45° reflector (14) is truncated, the plate with the photodetector(s) being formed by the top face (16) of said truncated conical reflector and in that a parabolic reflector (15), whose axis coincides with the tube axis, is situated opposite the conical reflector (14) such that the photosensitive surfaces of the photodetector(s) are directed towards the parabolic reflector.

2. Infra-red transmit/receive unit (4) according to claim 1, characterized in that a plurality of transmit platforms (10) are provided one above the other in the transparent tube such that the light-emitting diodes radiate upwards, and that the receive platform (11) is situated above the uppermost transmit platform such that the parabolic reflector (15) forms the top of the transparent tube.

3. Infra-red communication system in which messages in the form of infra-red message signals are transmitted and exchanged between transmit/receive units (4) according to claims 1 and 2, wherein the message transmission is used for controlling vehicle (1) movements to transport goods (2) or personnel in a particular area, such a transmit/receive unit (4) with an associated data-input (24) and read-out (25) unit being provided on each vehicle and one or more permanently installed such transmit/receive units (4) being provided in the area itself, wherein the vehicle transmit/receive units are mounted on top of or underneath a vehicle and the permanently installed transmit/receive units accordingly provided above the ground.

**Revendications**

1. Unité d'émission-réception infrarouge (4) pour la transmission omnidirectionnelle principalement en direction horizontale de signaux de message infrarouges, comprenant un tube transparent destiné à être disposé verticalement et comportant, d'une plate-forme d'émission (10) munie d'au moins une diode électroluminescente et d'une plate-forme de réception (11) munie d'au moins un photodétecteur, au moins l'une de ces plate-formes, la plate-forme d'émission comportant une plaque horizontale (12) sur laquelle la ou les diodes électroluminescentes rayonnent verticalement vers un réflecteur conique à 45° (13) et la plate-forme de réception comportant une plaque horizontale sur laquelle le ou les photodétecteurs sont dirigés en direction verticale vers un réflecteur conique à 45° (14), les axes des réflecteurs coniques à 45° coïncidant avec l'axe du tube, caractérisée en ce que dans la plate-forme de réception le réflecteur conique à 45° (14) est tronqué, la plaque avec le ou les photodétecteurs étant formée par la face supérieure (16) dudit réflecteur conique tronqué, et un réflecteur parabolique (15) dont l'axe coïncide avec l'axe du tube est situé vis-à-vis du réflecteur conique (14) de telle manière que les surfaces photosensibles du ou des photodétecteurs sont dirigées vers le réflecteur parabolique.

2. Unité d'émission-réception infrarouge (4) selon la revendication 1, caractérisée en ce qu'il est prévu dans le tube transparent une pluralité de plate-formes d'émission (10) situées l'une au-dessus de l'autre de telle manière que les diodes électroluminescentes rayonnent vers le haut, et la plate-forme de réception (11) est située au-dessus de la plate-forme d'émission supérieure de telle manière que le réflecteur parabolique (15) forme la partie supérieure du tube transparent.

3. Système de communication infrarouge dans lequel des messages sous forme de signaux de message infrarouges sont transmis et échangés entre des unités d'émission-réception (4) selon la revendication 1 et 2, dans lequel la transmission de messages est utilisée pour commander les mouvements de véhicules (1) pour le transport de biens (2) ou de personnes dans un domaine particulier, une telle unité d'émission-réception (4) munie d'une unité associée d'entrée de données (24) et de lecture (25) étant prévue sur chaque véhicule et une ou plusieurs telles unités d'émission-réception (4) installées de façon permanente étant prévues dans le domaine lui-même, système dans lequel les unités d'émission-réception des véhicules sont montées au sommet ou au-dessous d'un véhicule et les unités d'émission-réception installées de façon permanente sont de façon correspondantes prévues au-dessus du sol.

**Patentansprüche**

1. Infrarot-Sende-Empfangseinheit (4) zur Allrichtungsübertragung von infraroten Nachrichtensignalen hauptsächlich in horizontaler Richtung, umfassend ein zur vertikalen Anordnung bestimmtes durchsichtiges Rohr, welches von einer Sendeplattform (10) mit mindestens einer Lauchtdiode und einer Empfangsplattform (11) mit mindestens einem Fotodetektor zumindast die eine Plattform aufweist, wobei die Sendeplattform eine horizontale Platte (12) umfasst, bei welcher die Leuchtdiode(n) vertikal zu einem 45°-konischen Reflektor (13) hin strahlen und die Empfangsplattform eine horizontale Platte umfasst, bei welcher der/die Fotodetektor(en) in vertikaler Richtung zu einem 45°-konischen Reflektor (14) hin gerichtet sind, wobei die Achse der 45°-konischen Reflektoren mit der Achse des Rohrs zusammenfällt, dadurch gekennzeichnet, dass in der Empfangsplattform der 45°-konische Reflektor (14) abgestumpft ist, die Platte mit dem/den Fotodetektor(en) von der oberen Fläche (16) dieses abgestumpften konischen Reflektors gebildet ist, und ein parabolischer Reflektor (15), dessen Achse mit der Achse des Rohre zusammenfällt, gegenüber dem konischen Reflektor (14) angeordnet ist, derart, dass die lichtempfindlichen Flächen des/der Fotodetektor(en) zum parabolischen Reflektor hin gerichtet sind.

2. Infrarot-Sende-Empfangseinheit (4) nach Anspruch 1, dadurch gekennzeichnet, dass eine Mehrzahl von im durchsichtigen Rohr übereinander angeordneten Sendeplattformen (10) vorgesehen ist, derart, dass die Leuchtdioden nach oben strahlen, und die Empfangsplattform (11) oberhalb der obersten Sendeplattform angeordnet ist, derart, dass der parabolische Reflektor (15) den Oberteil des durchsichtigen Rohrs bildet.

3. Infrarot-Übertragungssystem, bei welchem Nachrichten in Form von infraroten Nachrichtensignalen zwischen Sende-Empfangseinheiten (4) nach den Ansprüchen 1 und 2 übertragen und ausgetauscht werden, wobei die Übertragung von Nachrichten zur Steuerung von Fahrzeugbewegungen (1) verwendet wird, um Waren (2) oder Personen in einem bestimmten Bereich zu transportieren, wobei eine solche Sende-Empfangseinheit (4) mit einer zugeordneten Einheit zur Dateneingabe (24) und Datenlesung (25) an jedem Fahrzeug vorgesehen ist und eine oder mehrere permanent installierte solche Sende-Empfangseinheiten (4) im Bereich selber vorgesehen sind, bei welchem System die Sende-Empfangseinheiten der Fahrzeuge am Oberteil oder unterhalb eines Fahrzeugs montiert sind und die permanent installierten Sende-Empfangseinheiten entsprechend über dem Boden vorgesehen sind.

fig-1

fig-3

# Fig-2

Fig-4

Fig-5